# FASCICULE DE BREVET EUROPEEN

(11) **EP 3 231 067 B1**
(45) Date de publication et mention de la délivrance du brevet: **19.09.2018**
(21) Numéro de dépôt: 15817999.4
(22) Date de dépôt: 10.12.2015
(51) Int. Cl.: H02K 5/14, H01R 39/415

(54) **CAGE À BALAI AMÉLIORÉE POUR DÉMARREUR DE VÉHICULE AUTOMOBILE, PORTE-BALAIS, MOTEUR ÉLECTRIQUE, ET DÉMARREUR DE VÉHICULE AUTOMOBILE CORRESPONDANTS**
VERBESSERTER BÜRSTENKÄFIG FÜR KRAFTFAHRZEUGANLASSER UND ZUGEHÖRIGER BÜRSTENHALTER, ELEKTROMOTOR UND KRAFTFAHRZEUGANLASSER
IMPROVED BRUSH CAGE FOR MOTOR VEHICLE STARTER, AND CORRESPONDING BRUSH HOLDER, ELECTRIC MOTOR AND MOTOR VEHICLE STARTER

(30) Priorité: 12.12.2014 FR 1462294
(43) Date de publication de la demande: 18.10.2017
(73) Titulaire: Valeo Equipements Electriques Moteur, 94046 Créteil Cedex (FR)
(72) Inventeur: NALIN, Marie-Ange, CS 38070 St Quentin Fallavier (FR); GENTIL, Maximilien, CS 38070 St Quentin Fallavier (FR); BOST, Alain, CS 38070 St Quentin Fallavier (FR); PAYS, Wilfried, CS 38070 St Quentin Fallavier (FR); MOLLON, Pierre, CS 38070 St Quentin Fallavier (FR)
(74) Mandataire: Vaufleury, Guillaume
(86) Numéro de dépôt international: PCT/FR2015/053424
(87) Numéro de publication internationale: WO 2016/092222

(56) Documents cités:
- WO-A1-02/50981
- WO-A1-2014/049289
- DE-A1- 3 644 128
- US-A- 4 868 441

## Description

L'invention porte sur une cage à balai pour démarreur de véhicule automobile, ainsi que sur le porte-balais, le moteur électrique, et le démarreur correspondants. L'invention trouve une application particulièrement avantageuse, mais non exclusive, avec les démarreurs de véhicule automobile, en particulier ceux installés dans les véhicules équipés de la fonction d'arrêt et de re-démarrage automatique du moteur thermique (fonction dite "stop and start" en anglais).

De façon connue en soi, un porte-balais est monté sur l'arbre du rotor d'un démarreur de manière à faire coopérer les balais avec un collecteur électrique solidaire de l'arbre du rotor. Le porte-balais comporte une platine de support portant un ensemble de cages servant chacune de logement à un balai. Les balais réalisés en matériau électriquement conducteur permettent l'alimentation électrique du rotor par commutation du courant électrique dans les conducteurs du rotor.

A cet effet, chaque balai comporte une face destinée à venir frotter contre les lames conductrices du collecteur reliées au bobinage du rotor. Un moyen élastique, tel qu'un ressort, exerce sur chaque balai reçu dans une cage un effort en direction du collecteur pour assurer le contact entre le balai et les lames du collecteur.

Les balais présentent des polarités alternées. Ainsi, les balais de polarité positive sont reliés électriquement, via leur tresse respective, à un connecteur inter-balais auquel est également connecté électriquement le fil d'alimentation issu du contacteur du démarreur. Par ailleurs, les balais destinés au retour de courant sont reliés électriquement à la masse de la machine au moyen de leur tresse respective soudée sur la platine.

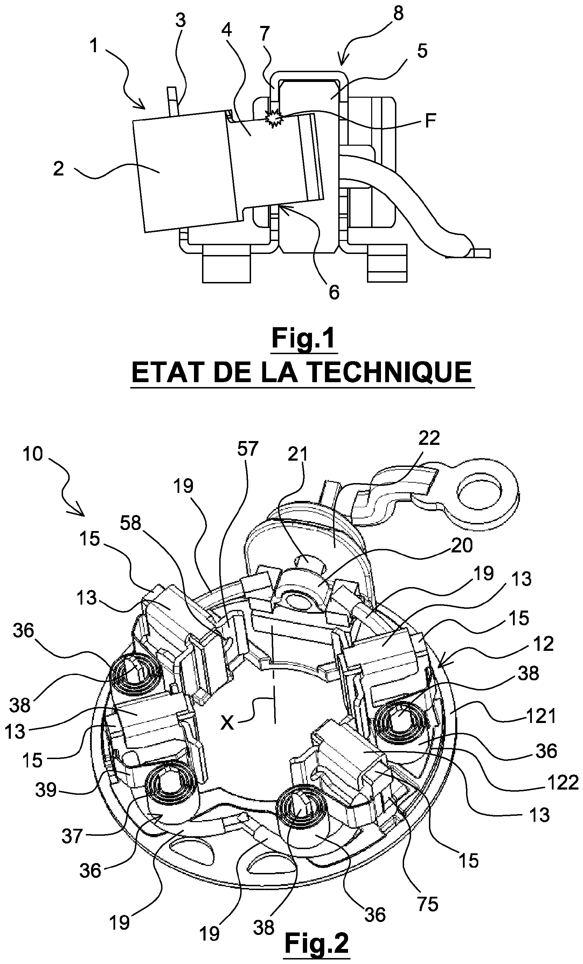

Comme on peut le voir sur la figure 1, dans certaines configurations de porte-balais, il est connu d'utiliser un ressort 1 de type à spirales comprenant une partie enroulée 2 montée sur une patte 3 ainsi qu'un bras 4 s'étendant à partir d'une extrémité de la partie enroulée 2 destiné à venir en appui sur une face d'extrémité du balai 5 opposée à la face en contact avec les lames du collecteur. Pour permettre au ressort 1 d'appliquer une poussée sur le balai 5, le bras 4 passe par l'intermédiaire d'une ouverture 6 ménagée dans une paroi latérale 7 de la cage à balai 8.

Du fait du couple appliqué par le ressort 1 sur la patte 3 ainsi que des vibrations subies par le système, le ressort 1 a tendance à se positionner en travers par rapport à la patte 3 et à venir frotter contre un des bords parallèles de l'ouverture 6 (le bord haut (cf. flèche F) ou le bord bas suivant les conditions de fonctionnement), ce qui peut provoquer un blocage du déplacement du bras 4 du ressort 1.

WO-A1-2014049289 décrit une cage à balais d'près l'objet de la revendication 1.

L'invention vise à remédier efficacement à cet inconvénient en proposant une cage à balai pour porte-balais de moteur électrique comportant:
- deux parois latérales et une paroi de liaison reliant les deux parois latérales,
- dans laquelle au moins une des parois latérales comporte une ouverture pour le passage d'un bras de ressort,
- ladite paroi latérale comprenant ladite ouverture ayant une longueur mesurée entre une première extrémité destinée à être la plus éloignée d'un collecteur et une seconde extrémité destinée à être la plus proche dudit collecteur,
caractérisée en ce que ladite ouverture comprend au moins une première portion entre les deux extrémités qui s'évase en s'élargissant vers la seconde extrémité.

Ainsi, du fait de la forme évasée de l'ouverture ménagée dans la paroi latérale de la cage à balai, le ressort présente plus de liberté lors de sa course. On évite ainsi le blocage du déplacement du ressort lorsque ce dernier se positionne en travers par rapport à son support.

Selon une réalisation, ladite première portion de ladite ouverture comprend deux bords ménagés dans ladite paroi latérale et en ce que un des deux bords est incliné par rapport à ladite paroi de liaison pour former l'évasement. Selon une réalisation, le second bord est en outre incliné dans la direction opposée par rapport à la direction d'inclinaison du premier bord.

Selon une réalisation, ladite ouverture comprend une deuxième portion s'étendant entre ladite première extrémité et ladite première portion et ladite deuxième portion s'évase en s'élargissant vers ladite première extrémité. Cela permet de faciliter l'insertion et le centrage du bras du ressort à spirales.

Selon une réalisation, ladite ouverture comprend une troisième portion s'étendant entre ladite seconde extrémité et ladite première portion et ladite troisième portion s'évase en s'élargissant vers ladite première extrémité. Cela permet de faciliter l'insertion de la tresse du balai dans l'ouverture de la paroi dans la zone située à proximité du collecteur.

Selon une réalisation, ladite ouverture comprend une quatrième portion s'étendant entre ladite seconde extrémité et ladite troisième portion, ladite quatrième portion étant délimitée par des bords parallèles de ladite paroi latérale séparant deux murets de ladite paroi latérale, ladite cage à balai comprenant en outre une ailette reliant lesdits deux murets entre eux.

Selon une réalisation, ladite ailette comprend deux parties s'étendant dans deux plans différents inclinés l'un par rapport à l'autre. On augmente ainsi la rigidité de la cage à balai.

Selon une réalisation, ladite première portion de ladite ouverture comprend trois bords ménagés dans ladite paroi latérale dont un bord reliant un bord incliné à un second bord.

Selon une réalisation, la cage à balai comporte une première et une seconde parois latérales, chacune des parois latérales comprenant une ouverture,
- ladite première paroi latérale comprenant une ouverture ayant au plus de quatre portions telles que précédemment définies, et
- ladite seconde paroi latérale comprenant une ouverture ayant au plus deux portions telles que précédemment définies.

L'invention a également pour objet un porte-balais de moteur électrique équipé de cages à balai telles que précédemment définies.

L'invention concerne en outre un moteur électrique comportant un porte-balais tel que précédemment défini.

L'invention porte également sur un démarreur de véhicule automobile comportant un moteur électrique tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, est une vue de dos d'une cage à balai et du ressort à spirales associé illustrant les problèmes de frottement posés par les dispositifs de l'état de l'art;
La figure 2 est une vue en perspective d'un porte-balais de moteur électrique selon la présente invention;
La figure 3 est une vue en perspective de la platine du porte-balais de la figure 2;
Les figures 4a à 4c correspondent respectivement à une vue de côté et à deux vues en perspective selon deux angles de vue différents illustrant un premier mode de réalisation d'une cage à balai selon la présente invention;
La figure 5 est une vue en perspective illustrant un deuxième mode de réalisation d'une cage à balai selon la présente invention;
La figure 6 est une vue en perspective illustrant un troisième mode de réalisation d'une cage à balai selon la présente invention;
Les figures 7a à 7c sont des vues en perspective illustrant les trois différents modes de réalisation d'un ressort à spirales selon la présente invention;

Les éléments identiques, similaires, ou analogues conservent la même référence d'une figure à l'autre.

La figure 2 montre un porte-balais 10 selon l'invention destiné à être utilisé avec un démarreur de véhicule automobile. Ce porte-balais 10 comporte une platine de support 12 de forme sensiblement annulaire sur laquelle est fixé un ensemble de cages 13 servant chacune de logement à un balai 15. Un axe X de la platine de support 12 correspond à l'axe du porte-balais 10.

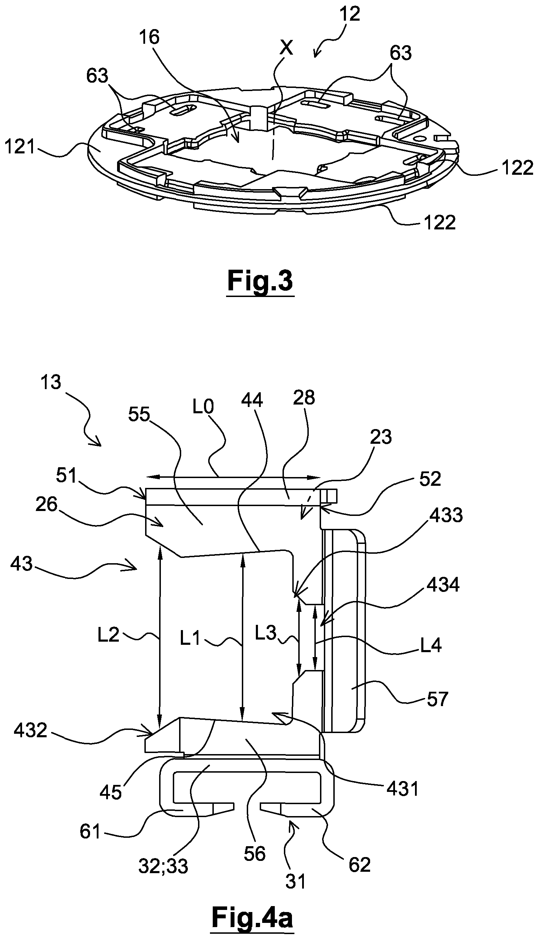

La platine de support 12 bien visible sur la figure 3 est une pièce monobloc comportant une plaque métallique 121 et des couches surmoulées 122 réalisées de part et d'autre de la plaque métallique 121. Les couches surmoulées 122 sont réalisées au moyen d'une matière plastique assurant une bonne isolation électrique. Les couches surmoulées 122 recouvrent toutes les zones à risque de la platine 12, c'est-à-dire, toutes les zones où pourrait apparaître un court-circuit. Les couches surmoulées 122 sont sensibles à la chaleur et déformables à partir d'une température prédéterminée afin de pouvoir provoquer un court-circuit en cas de surchauffe. Typiquement, la matière plastique utilisée pour les couches surmoulées 122 est une matière thermoplastique telle qu'un polyamide PA4.6 ou PA6.6 ou un polypropylène PPS chargé en fibres.

La platine de support 12 et les cages 13 qu'elle porte viennent se fixer sur un capot (non représenté) formant un palier arrière pour l'arbre de rotor de la machine électrique. En outre, la partie centrale de la platine 12 comporte un orifice 16 par lequel l'ensemble qu'elle forme avec les cages à balai 13 et les balais 15 est monté autour de l'arbre du rotor du démarreur.

Chaque balai 15 est monté à coulissement à l'intérieur d'une cage 13 laquelle est ouverte du côté de l'axe X pour permettre la mise en contact électrique des balais 15 avec des lames portées par un collecteur d'un rotor de machine électrique (non représenté).

Les balais 15 présentent des polarités alternées. Ainsi, les balais 15 de polarité positive sont reliés électriquement, via leur tresse 19 respective, à un connecteur inter-balais 20 auquel est également connecté électriquement le fil d'alimentation issu du contacteur du démarreur. En l'occurrence, le connecteur inter-balais 20 est relié au fil d'alimentation via un pion 21 traversant un passe-fil 22 coopérant avec la carcasse du démarreur pour assurer l'étanchéité du porte-balais 10.

Les balais positifs 15 et leurs cages 13 correspondantes sont isolés électriquement de la polarité négative pour un bon fonctionnement du démarreur. Cette isolation est obtenue par les couches surmoulées 122. Les tresses souples 19 sont avantageusement en cuivre ou en alliage de cuivre pour faciliter le soudage sur la plaque 121. Les tresses 19 pourront également jouer un rôle de fusible. Par ailleurs, les balais 15 de polarité négative destinés au retour de courant sont reliés électriquement à la masse de la machine au moyen de leur tresse 19 respective soudée sur la plaque 121 de la platine 12.

Plus précisément, comme cela est bien visible sur les figures 4a à 4c, chaque cage à balai 13 présente un logement 23 pour le balai 15 délimité par deux parois latérales 26, 27 parallèles en vis-à-vis reliées entre elles par une paroi 28 de liaison supérieure. Chaque cage 13 est fixée sur la platine 12 au moyen d'un dispositif de fixation 31 décrit plus en détails ci-après appartenant à des parois d'extrémité 32, 33 issues des bords inférieurs des parois latérales 26, 27.

Par ailleurs, un ressort à spirales 36 associé à chaque cage 13 sollicite radialement le balai 15 correspondant vers des lames de contact du collecteur. A cet effet, chaque ressort 36 comporte une partie enroulée 37 montée autour d'une patte 38 s'étendant axialement par rapport à l'axe X ainsi qu'un bras 39 destiné à venir en appui contre une face du balai 15 opposée à la face en contact avec les lames du collecteur. La patte 38, qui s'étend en dehors du logement 23 du balai 15, est en l'occurrence obtenue par pliage d'une des parois d'extrémité 32, 33 de chaque cage 13.

Comme on peut le voir clairement sur la figure 4a, la paroi latérale 26 comporte une ouverture 43 pour le passage du bras 39 du ressort 36. Cette paroi latérale 26 a une longueur L0, mesurée suivant un direction perpendiculaire à l'axe X, entre une première extrémité 51 la plus éloignée du collecteur et une seconde extrémité 52 la plus proche du collecteur (située du côté opposé au bras 39 du ressort).

L'ouverture 43 comprend au moins une première portion 431 entre les deux extrémités 51, 52 qui s'évase en s'élargissant vers la seconde extrémité 52, c'est-à-dire que la largeur L1 de cette première portion 431 mesurée suivant l'axe X augmente lorsque l'on se déplace vers la seconde extrémité 52. Cette première portion 431 de l'ouverture 43 comprend deux bords 44, 45 en vis-à-vis ménagés dans la paroi latérale 26. Un des bords 44 est incliné par rapport à la paroi de liaison 28 et le second bord 45 est également incliné dans la direction opposée par rapport à la direction d'inclinaison du premier bord 44 pour former l'évasement. En variante, un seul des deux bords 44, 45 est incliné pour former l'évasement.

L'ouverture 43 comprend en outre une deuxième portion 432 s'étendant entre la première extrémité 51 et la première portion 431. Cette deuxième portion 432 s'évase en s'élargissant vers la première extrémité 51, c'est-à-dire que la largeur L2 de cette deuxième portion 432 mesurée suivant l'axe X augmente lorsque l'on se déplace vers la première extrémité 51. Cette deuxième portion 432 permet de faciliter l'insertion et le centrage du bras 39 du ressort 36.

L'ouverture 43 comprend une troisième portion 433 s'étendant entre la seconde extrémité 52 et la première portion 431. Cette troisième portion 433 s'évase en s'élargissant vers la première extrémité 51, c'est-à-dire que la largeur L3 de cette troisième portion 433 mesurée suivant l'axe X augmente lorsque l'on se déplace vers la première extrémité 51. Cette troisième portion 433 permet de faciliter l'insertion de la tresse 19 du balai 15 lors de son déplacement vers le collecteur dû à l'usure du balai 15.

L'ouverture 43 comprend une quatrième portion 434 s'étendant entre la seconde extrémité 52 et la troisième portion 433. Cette quatrième portion 434 est délimitée par des bords parallèles de la paroi 26. Autrement dit, cette quatrième portion 434 présente une largeur L4 mesurée suivant l'axe X sensiblement constante. Les bords de cette portion 434 séparent deux murets 55, 56 formant la paroi 26. Ces deux murets 55, 56 globalement en forme de L sont reliés entre eux par une ailette 57.

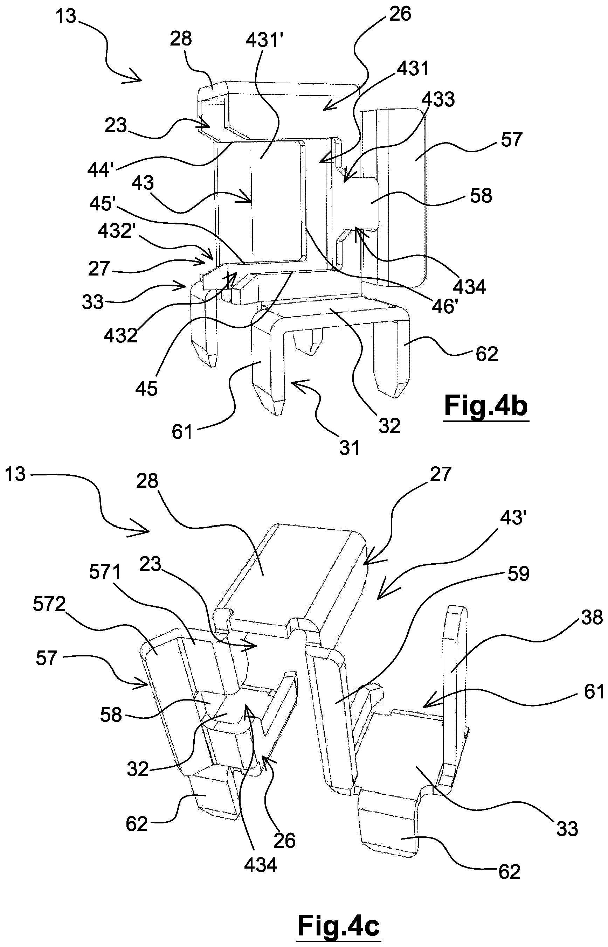

Afin d'augmenter la rigidité de la cage 13, l'ailette 57 comprend deux parties 571, 572 s'étendant dans deux plans différents inclinés l'un par rapport à l'autre, comme cela est bien visible sur la figure 4c. Il est à noter que la quatrième portion 434 de l'ouverture 43 peut se prolonger dans une échancrure 58 ménagée dans l'ailette 57 pour autoriser le passage de la tresse 19 du balai 15 logé dans la cage 13 correspondante au plus proche du collecteur.

Comme on peut le voir sur la figure 4b, l'autre paroi latérale 27 présente une ouverture 43' comportant une première portion 431' et une deuxième portion 432' ayant une configuration analogue respectivement à la première portion 431 et à la deuxième portion 432 de l'ouverture 43. Dans ce cas, les bords inclinés 44' et 45' ménagés dans la paroi 27 sont reliés entre eux par un bord 46' ayant une orientation parallèle à l'axe X. Autrement dit, la paroi latérale 27 est formée par deux murets qui sont reliés entre eux du côté du collecteur par une bande de matière s'étendant dans le plan de la paroi 27. En variante, un seul des deux bords 44' et 45' est incliné. Du côté de la face du balai 15 débouchant du côté du collecteur, une ailette 59 est issue d'un bord de la paroi 27 pour rigidifier mécaniquement la cage 13.

Comme cela est illustré sur la figure 2, il sera possible de positionner la tresse 19 du balai 15 et le bras 39 du ressort 36 correspondant d'un même côté de la cage 13, pour les balais de polarité négative dont la tresse 19 est soudée sur la plaque 121. La tresse 19 et le bras 39 sont en l'occurrence positionnés du côté de la paroi 26 qui comporte les portions ouvertes 431, 432 autorisant le passage du bras 39 du ressort 36 ainsi que les portions ouvertes 433, 434 autorisant le passage de la tresse 19.

Par ailleurs, pour les balais 15 de polarité positive ayant leur tresse 19 soudée sur l'interconnecteur 20, on positionne le bras 39 du ressort 36 et la tresse 19 respectivement de part et d'autre du balai 15. Dans ce cas, le ressort 36 est positionné du côté de la paroi 27, de manière que son bras 39 passe à travers les portions 431', 432' de l'ouverture 43'; tandis que la tresse 19 est positionnée du côté de la paroi 26 pour pouvoir passer en fin de course du ressort 36 par les portions ouvertes 433, 434 ainsi que par l'échancrure 58 de l'ailette 57 afin que la tresse 19 puisse se déplacer au plus près possible du collecteur pour maximiser le volume d'utilisation du balai 15.

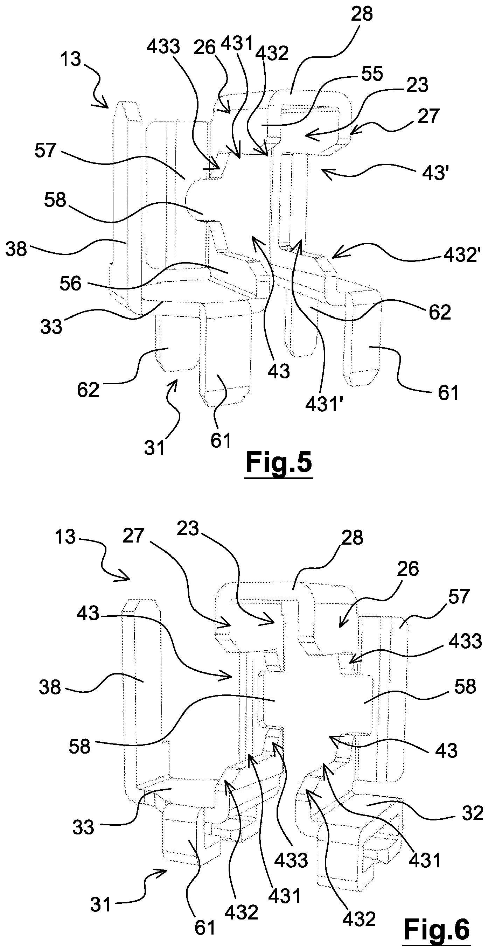

En variante, comme cela est représenté sur la figure 5, l'ouverture 43 de la paroi 26 est dépourvue de quatrième portion 434, la troisième portion 433 se prolongeant directement dans l'échancrure 58 réalisée dans l'ailette 57. Dans ce cas, l'ouverture 43 sépare deux murets 55, 56 en forme de L reliés entre eux par l'ailette 59. La paroi latérale 27 munie de son ouverture 43' et des deux portions correspondantes 431' et 432' est analogue à celle du mode de réalisation des figures 4a à 4c.

En variante, comme cela est représenté sur la figure 6, les deux parois 26, 27 sont symétriques et présentent des ouvertures 43 identiques ayant une première portion 431, une deuxième portion 432, et une troisième portion 433 se prolongeant dans une échancrure 58 réalisée dans l'ailette correspondante 57, 59, comme dans le mode de réalisation de la figure 5.

Par ailleurs, le système de fixation à la platine 12 est formé par deux paires de jambes 61, 62. Les jambes 61, 62 de chaque paires sont issues de deux bords en vis-à-vis des parois d'extrémité 32, 33. Une jambe 61 de chaque paire est destinée à traverser la platine 12 de part en part via un trou 63 réalisé suivant son épaisseur (cf. figure 3). L'autre jambe 62 de chaque paire est en appui contre un côté du contour intérieur délimitant l'orifice 16. Comme cela est montré sur les figures 4a et 6, les jambes 61, 62 de chaque paire sont destinées à être rabattues l'une vers l'autre contre la platine 12. Alternativement, le système de fixation 31 comporte au moins un rivet traversant la platine 12 et une paroi d'extrémité 32, 33 de la cage à balai 13. Chaque cage 13 pourra dans un exemple de réalisation être obtenue par pliage d'une plaquette de tôle mince de manière à former sensiblement un oméga dont les branches d'extrémité sont fixées sur la platine 12.

De préférence, les trous 63 recevant les jambes 61, 62 des cages 13 de polarité négative ainsi que les zones de la platine 12 en contact avec les cages 13 recevant les balais 15 de polarité négative ne sont pas isolés électriquement, en sorte qu'un contact électrique peut intervenir entre les cages 13 de polarité négative et la plaque 121 via les jambes 61, 62. Ce contact n'est pas nuisible au fonctionnement du démarreur, dans la mesure où il participe à l'établissement du contact électrique entre les pièces destinées à être au même potentiel électrique, en l'occurrence le potentiel de masse dans cette application.

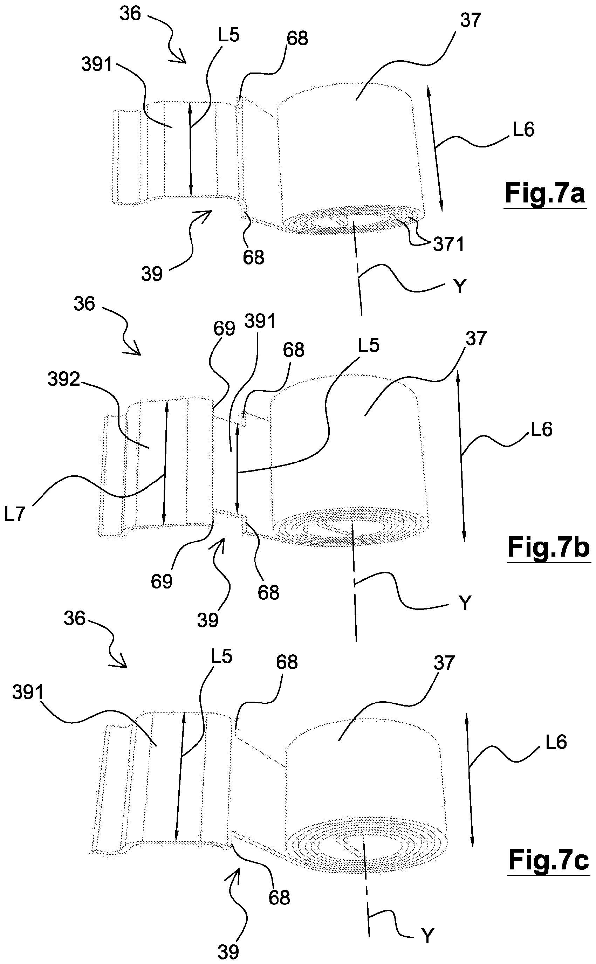

Comme on peut le voir clairement sur les figures 7a à 7c, la partie enroulée 37 du ressort 36 est formée par une pluralité de spires 371 coaxiales autour d'un axe Y. Le bras 39 s'étend depuis une extrémité de la partie enroulée 37 montée autour de la patte 38. Le bras 39 est destiné à venir en appui contre la face arrière du balai 15 opposée à la face du balai 15 en appui contre les lames du collecteur.

Dans le mode de réalisation de la figure 7a, le bras 39 comprend une portion 391 dont la largeur L5 mesurée suivant l'axe Y est inférieure à la largeur L6 de la partie enroulée 37 mesurée suivant l'axe Y. Cette portion 391 est délimitée par deux décrochements 68 issus de la partie du bras 39 ayant une largeur identique à la largeur L6 de la partie enroulée 37 et s'étendant vers l'intérieur de la bande de matière du bras 39.

Cette portion 391 du bras 39 de largeur réduite est au minimum égale à la longueur de la portion du bras 39 traversant l'ouverture 43 de la paroi latérale 26 entre le début de course du ressort 36 et la fin de course du ressort 36. On précise ici que le début de course du ressort 36 correspond à la position du bras 39 du ressort 36 pour un balai 15 en début de vie ayant une longueur maximale, tandis que la fin de course du ressort 36 correspond à une position du bras 39 du ressort 36 pour un balai 15 en fin de vie ayant une longueur minimale. En l'occurrence, la portion 391 s'étend jusqu'à l'extrémité du bras 39 située dans la cage 13 qui est en appui contre le balai 15.

Dans le mode de réalisation de la figure 7b, la portion 391 de largeur réduite est sensiblement égale à la longueur de la portion du bras 39 traversant l'ouverture 43 de la paroi latérale 26 entre le début et la fin de course du ressort 36. Dans ce cas, le bras 39 peut comporter une seconde portion 392 s'étendant entre la première portion 391 et l'extrémité du bras 39 située dans la cage 13. La largeur L7 de la seconde portion 392 est supérieure à la largeur L5 de la première portion 391. En l'occurrence, bien que pouvant être différente, la largeur de la seconde portion 392 est égale à la largeur L6 de la partie enroulée 37. La portion 392 est délimitée à une de ses extrémités par les deux décrochements 68 et de l'autre côté par deux autres décrochements analogues 69 situés entre la première 391 et la deuxième 392 portions.

Dans un exemple de réalisation particulier, la première portion 391 présente une largeur L5 comprise entre 4 et 8mm. La partie enroulée 37 présente une largeur L6 de plus de 1 mm par rapport à la largeur L5 de la première portion 391. La bande métallique formant le ressort à spirales 36 présente une épaisseur comprise entre 0.25 et 0.7mm. Le diamètre de la partie enroulée 37 est de l'ordre de 10mm. Bien entendu, ces dimensions pourront varier en fonction de l'application.

Même si dans la plupart des cas, la partie enroulée 37 est plus large que la portion 391 du bras 39 traversant l'ouverture 43 afin de maximiser la puissance du ressort 36, dans certains modes de réalisation imposant des contraintes d'encombrement sévères, le bras 39 du ressort 36 présente une portion 391 ayant une largeur L5 supérieure à la largeur L6 de la partie enroulée 37, comme cela est illustré à la figure 7c. Une telle configuration permet au bras 39 de s'adapter à la zone d'appui avec le balai 15 tout en permettant au ressort 36 de présenter un volume réduit. Dans ce cas, les décrochements 68 s'étendent depuis la partie du bras 39 ayant la même largeur que la partie enroulée 37 vers l'extérieur de la bande de matière formant le ressort 36.

En variante, l'extrémité du bras 39 du ressort 36 est en appui uniquement contre une partie de la face d'extrémité. Cette partie pourra correspondre par exemple au fond d'une rainure 75 permettant de faciliter le guidage du bras 39 du ressort 36 lors de son déplacement, comme cela est illustré sur la figure 2.

L'homme du métier pourra bien entendu modifier la configuration du porte-balais 10 précédemment décrit sans sortir du cadre de l'invention défini ci-après par les revendications.

Ainsi, en variante notamment, le porte-balais 10 comporte plus de quatre balais 15, chaque balai 15 pouvant par exemple être associé à un autre balai positionné du côté opposé de la platine 12.

Le porte-balais 10 est ici un porte-balais de moteur électrique d'un démarreur de véhicule automobile. En variante, le porte-balais 10 pourrait également appartenir à un alternateur ou à un alterno-démarreur.

## Revendications

1. Cage à balai (13) pour porte-balais (10) de moteur électrique comportant:
- deux parois latérales (26, 27) et une paroi de liaison (28) reliant les deux parois latérales (26, 27),
- dans laquelle au moins une des parois latérales (26, 27) comporte une ouverture (43, 43') pour le passage d'un bras (39) de ressort (36),
- ladite paroi latérale (26, 27) comprenant ladite ouverture (43, 43') ayant une longueur (L0) mesurée entre une première extrémité (51) destinée à être la plus éloignée d'un collecteur et une seconde extrémité (52) destinée à être la plus proche dudit collecteur,
**caractérisée en ce que** ladite ouverture (43, 43') comprend au moins une première portion (431, 431') entre les deux extrémités (51, 52) qui s'évase en s'élargissant vers la seconde extrémité (52).

2. Cage à balai selon la revendication 1, **caractérisée en ce que** ladite première portion (431, 431') de ladite ouverture (43, 43') comprend deux bords (44, 45) ménagés dans ladite paroi latérale (26, 27) et **en ce que** un des deux bords (44) est incliné par rapport à ladite paroi de liaison (28) pour former l'évasement.

3. Cage à balai selon la revendication 2, **caractérisée en ce que** le second bord (45) est en outre incliné dans la direction opposée par rapport à la direction d'inclinaison du premier bord (44).

4. Cage à balai selon l'une quelconque des revendications 1 à 3, **caractérisée en ce que** ladite ouverture (43, 43') comprend une deuxième portion (432, 432') s'étendant entre ladite première extrémité (51) et ladite première portion (431, 431') et **en ce que** ladite deuxième portion (432, 432') s'évase en s'élargissant vers ladite première extrémité (51).

5. Cage à balai selon la revendication 4, **caractérisée en ce que** ladite ouverture (43) comprend une troisième portion (433) s'étendant entre ladite seconde extrémité (52) et ladite première portion (431) et **en ce que** ladite troisième portion (433) s'évase en s'élargissant vers ladite première extrémité (51).

6. Cage à balai selon la revendication 5, **caractérisée en ce que** ladite ouverture (43) comprend une quatrième portion (434) s'étendant entre ladite seconde extrémité (52) et ladite troisième portion (433), dans laquelle ladite quatrième portion (434) est délimitée par des bords parallèles de ladite paroi latérale (26, 27) séparant deux murets (55, 56) de ladite paroi latérale (26, 27), et **en ce que** ladite cage à balai (13) comprend en outre une ailette (57, 59) reliant lesdits deux murets (55, 56) entre eux.

7. Cage à balai selon revendication 6, **caractérisée en ce que** ladite ailette (57) comprend deux parties (571, 572) s'étendant dans deux plans différents inclinés l'un par rapport à l'autre.

8. Cage à balai selon l'une quelconque des revendications 1 à 4, **caractérisée en ce que** ladite première portion (431') de ladite ouverture (43') comprend trois bords (44', 45', 46') ménagés dans ladite paroi latérale (26, 27) dont un bord (46') reliant un bord incliné (44') à un second bord (45').

9. Cage à balai comportant une première et une seconde parois latérales (26, 27), chacune des parois latérales (26, 27) comprend une ouverture (43, 43'), **caractérisée en ce que**:
- ladite première paroi latérale (26) comprend une ouverture (43) définie selon l'une des revendications 1 à 7, et
- ladite seconde paroi latérale (27) comprend une ouverture (43') définie selon la revendication 8.

10. Porte-balais (10) de moteur électrique équipé de cages à balai (13) telles que définies selon l'une quelconque des revendications précédentes.

11. Moteur électrique comportant un porte-balais (10) tel que défini selon la revendication 10.

12. Démarreur de véhicule automobile comportant un moteur électrique tel que défini selon la revendication 11.

## Patentansprüche

1. Bürstenkäfig (13) für Bürstenhalter (10) eines Elektromotors, der Folgendes umfasst:
- zwei Seitenwände (26, 27) und eine Verbindungswand (28), die die zwei Seitenwände (26, 27) verbindet,
- wobei mindestens eine der Seitenwände (26, 27) eine Öffnung (43, 43') für das Durchgehen eines Arms (39) einer Feder (36) umfasst,
- wobei die Seitenwand (26, 27), die die Öffnung (43, 43') umfasst, eine Länge (L0) hat, die zwischen einem ersten Ende (51), das dazu bestimmt ist, von einem Kollektor am weitesten entfernt zu sein, und einem zweiten Ende (52), das dazu bestimmt ist, dem Kollektor am nächsten zu sein, gemessen wird,
**dadurch gekennzeichnet, dass** die Öffnung (43, 43') mindestens einen ersten Abschnitt (431, 431') zwischen den zwei Enden (51, 52) umfasst, der sich unter Verbreitern zu dem zweiten Ende (52) aufweitet.

2. Bürstenkäfig nach Anspruch 1, **dadurch gekennzeichnet, dass** der erste Abschnitt (431, 431') der Öffnung (43, 43') zwei Ränder (44, 45) umfasst, die in der Seitenwand (26, 27) eingerichtet sind, und dass einer der zwei Ränder (44) in Bezug auf die Verbindungswand (28) geneigt ist, um die Aufweitung zu bilden.

3. Bürstenkäfig nach Anspruch 2, **dadurch gekennzeichnet, dass** der zweite Rand (45) außerdem in eine Richtung entgegengesetzt in Bezug auf die Neigungsrichtung des ersten Rands (44) geneigt ist.

4. Bürstenkäfig nach einem der Ansprüche 1 bis 3, **dadurch gekennzeichnet, dass** die Öffnung (43, 43') einen zweiten Abschnitt (432, 432') umfasst, der sich zwischen dem ersten Ende (51) und dem ersten Abschnitt (431, 431') erstreckt, und dass sich der zweite Abschnitt (432, 432') durch Verbreiterung zu dem ersten Ende (51) aufweitet.

5. Bürstenkäfig nach Anspruch 4, **dadurch gekennzeichnet, dass** die Öffnung (43) einen dritten Abschnitt (433) umfasst, der sich zwischen dem zweiten Ende (52) und dem ersten Abschnitt (431) erstreckt, und dass sich der dritte Abschnitt (433) unter Verbreitern zu dem ersten Ende (51) aufweitet.

6. Bürstenkäfig nach Anspruch 5, **dadurch gekennzeichnet, dass** die Öffnung (43) einen vierten Abschnitt (434) umfasst, der sich zwischen dem ersten Ende (52) und dem dritten Ende (433) erstreckt, wobei der vierte Abschnitt (434) von parallelen Rändern der Seitenwand (26, 27) begrenzt ist, die zwei niedrige Mauern (55, 56) der Seitenwand (26, 27) trennen, und dass der Bürstenkäfig (13) außerdem einen Flügel (57, 59) umfasst, der die zwei niedrigen Mauern (55, 56) miteinander verbindet.

7. Bürstenkäfig nach Anspruch 6, **dadurch gekennzeichnet, dass** der Flügel (57) zwei Teile (571, 572) umfasst, die sich in zwei unterschiedlichen Ebenen, die zueinander geneigt sind, erstrecken.

8. Bürstenkäfig nach einem der Ansprüche 1 bis 4, **dadurch gekennzeichnet, dass** der erste Abschnitt (431') der Öffnung (43') drei Ränder (44', 45', 46') umfasst, die in der Seitenwand (26, 27) eingerichtet sind, wobei ein Rand (46') einen geneigten Rand (44') mit einem zweiten Rand (45') verbindet.

9. Bürstenkäfig, der eine erste und eine zweite Seitenwand (26, 27) umfasst, wobei jede der Seitenwände (26, 27) eine Öffnung (43, 43') umfasst, **dadurch gekennzeichnet, dass**:
- die erste Seitenwand (26) eine Öffnung (43) umfasst, die nach einem der Ansprüche 1 bis 7 definiert ist, und
- die zweite Seitenwand (27) eine Öffnung (43') umfasst, die nach Anspruch 8 definiert ist.

10. Elektromotor-Bürstenhalter (10), der mit Bürstenkäfigen (13) wie in einem der vorhergehenden Ansprüche definiert ausgestattet ist.

11. Elektromotor, der einen Bürstenhalter (10) wie in Anspruch 10 definiert umfasst.

12. Kraftfahrzeuganlasser, der einen Elektromotor wie in Anspruch 11 definiert umfasst.

## Claims

1. Brush cage (13) for electric motor brush-holder (10) comprising:
- two sidewalls (26, 27) and a link wall (28) linking the two sidewalls (26, 27),
- in which at least one of the sidewalls (26, 27) comprises an opening (43, 43') for the passage of an arm (39) of a spring (36),
- said sidewall (26, 27) comprising said opening (43, 43') having a length (L0) measured between a first end (51) intended to be furthest away from a collector and a second end (52) intended to be nearest to said collector,
**characterized in that** said opening (43, 43') comprises at least one first portion (431, 431') between the two ends (51, 52) which flares by widening towards the second end (52).

2. Brush cage according to Claim 1, **characterized in that** said first portion (431, 431') of said opening (43, 43') comprises two edges (44, 45) formed in said sidewall (26, 27) and **in that** one of the two edges (44) is inclined relative to said link wall (28) to form the flare.

3. Brush cage according to Claim 2, **characterized in that** the second edge (45) is also inclined in the opposite direction relative to the direction of inclination of the first edge (44).

4. Brush cage according to any one of Claims 1 to 3, **characterized in that** said opening (43, 43') comprises a second portion (432, 432') extending between said first end (51) and said first portion (431, 431') and **in that** said second portion (432, 432') flares by widening towards said first end (51) .

5. Brush cage according to Claim 4, **characterized in that** said opening (43) comprises a third portion (433) extending between said second end (52) and said first portion (431) and **in that** said third portion (433) flares by widening towards said first end (51).

6. Brush cage according to Claim 5, **characterized in that** said opening (43) comprises a fourth portion (434) extending between said second end (52) and said third portion (433), in which said fourth portion (434) is delimited by parallel edges of said sidewall (26, 27) separating two kerb walls (55, 56) from said sidewall (26, 27), and **in that** said brush cage (13) further comprises a fin (57, 59) linking said two kerb walls (55, 56) to one another.

7. Brush cage according to Claim 6, **characterized in that** said fin (57) comprises two parts (571, 572) extending in two different planes inclined relative to one another.

8. Brush cage according to any one of Claims 1 to 4, **characterized in that** said first portion (431') of said opening (43') comprises three edges (44', 45', 46') formed in said sidewall (26, 27), including one edge (46') linking an inclined edge (44') to a second edge (45').

9. Brush cage comprising a first and a second sidewall (26, 27), each of the sidewalls (26, 27) comprising an opening (43, 43'), **characterized in that**:
- said first sidewall (26) comprises an opening (43) defined according to one of Claims 1 to 7, and
- said second sidewall (27) comprises an opening (43') defined according to Claim 8.

10. Electric motor brush-holder (10) equipped with brush cages (13) as defined according to any one of the preceding claims.

11. Electric motor comprising a brush-holder (10) as defined according to Claim 10.

12. Motor vehicle starter comprising an electric motor as defined according to Claim 11.
